(19) Europäisches Patentamt / European Patent Office / Office européen des brevets

(11) **EP 4 202 362 B1**

(12) **FASCICULE DE BREVET EUROPEEN**

(45) Date de publication et mention
de la délivrance du brevet:
**03.06.2026 Bulletin 2026/23**

(21) Numéro de dépôt: **22216141.6**

(22) Date de dépôt: **22.12.2022**

(51) Classification Internationale des Brevets (IPC):
**G01C 19/5719** (2012.01)    **G01C 25/00** (2006.01)

(52) Classification Coopérative des Brevets (CPC):
**G01C 25/005; G01C 19/5719**

(54) **PROCÉDÉ DE CALIBRAGE D'UN CAPTEUR ANGULAIRE INERTIEL MICRO-USINÉ ET SYSTÈME DE CALIBRAGE**

VERFAHREN ZUR KALIBRIERUNG EINES MIKROGEFERTIGTEN INERTIALWINKELSENSORS UND KALIBRIERSYSTEM

CALIBRATION METHOD FOR A MICROMACHINED INERTIAL ANGLE SENSOR AND CALIBRATION SYSTEM

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **23.12.2021 FR 2114368**

(43) Date de publication de la demande:
**28.06.2023 Bulletin 2023/26**

(73) Titulaire: **THALES**
**92400 Courbevoie (FR)**

(72) Inventeurs:
• **VERCIER, Nicolas, Jean-Marc, Frédéric**
**26000 VALENCE (FR)**
• **CHAUMET, Bernard**
**86101 CHATELLERAULT (FR)**

(74) Mandataire: **Lavoix**
**2, place d'Estienne d'Orves**
**75441 Paris Cedex 09 (FR)**

(56) Documents cités:
• **LI CHENG ET AL: "A Digital Calibration Technique of MEMS Gyroscope for Closed-Loop Mode-Matching Control", MICROMACHINES, vol. 10, no. 8, 25 June 2019 (2019-06-25), pages 496, XP055945313, ISSN: 2072-666X, DOI: 10.3390/ mi10080496**
• **CHINWUBA D EZEKWE ET AL: "A Mode-Matching Closed-Loop Vibratory Gyroscope Readout Interface With a 0.004/s/ Noise Floor Over a 50 Hz Band", IEEE JOURNAL OF SOLID-STATE CIRCUITS, IEEE, USA, vol. 43, no. 12, 1 December 2008 (2008-12-01), pages 3039 - 3048, XP011238649, ISSN: 0018-9200, DOI: 10.1109/ JSSC.2008.2006465**
• **ANONYMOUS ED - ANONYMOUS: "IEEE Recommended Practice for Inertial Sensor Test Equipment, Instrumentation, Data Acquisition, and Analysis", 1 January 2005, IEEE STANDARD; [IEEE STANDARD], IEEE, PISCATAWAY, NJ, USA, PAGE(S) _1 - 103, ISBN: 978-0-7381-4738-3, XP017600505**

**Description**

La présente invention concerne un procédé de calibrage d'un capteur angulaire inertiel micro-usiné.

La présente invention concerne également un système de calibrage configuré pour calibrer un capteur angulaire inertiel micro-usiné.

L'invention concerne le domaine des capteurs angulaires inertiels embarqués, notamment pour la navigation, le pilotage, le guidage ou la recherche de cap.

Un tel capteur angulaire inertiel est configuré pour mesurer une position angulaire, généralement appelé gyroscope, ou pour mesurer une vitesse angulaire, généralement appelé gyromètre.

De tels capteurs sont connus en soi, par exemple du document EP 2 960 625 A1 de la Demanderesse. Un tel capteur comprend des moyens d'excitation, de détection, et souvent d'équilibrage. Dans le capteur, les masses sont généralement excitées en vibration dans un plan formé par des axes X et Y. Ce plan est perpendiculaire à un axe Z qui forme un axe dit sensible du capteur. Lors d'une rotation du capteur autour de son axe sensible, une composition de la vibration des masses mobiles avec un vecteur de rotation angulaire engendre, par effet Coriolis, des forces qui mettent les masses mobiles en vibration naturelle perpendiculairement à la vibration d'excitation et à l'axe sensible. L'amplitude de cette vibration naturelle est proportionnelle à la vitesse de rotation du capteur et permet alors de déduire une valeur de la vitesse angulaire autour de l'axe sensible.

Lorsqu'une masse d'un tel capteur présente un balourd causé par des tolérances de fabrication par exemple, la mesure est, dans certains cas, susceptible d'être perturbée et n'est donc pas entièrement correcte.

Des solutions ont été proposées pour répondre à ce problème, par exemple un traitement par laser pour enlever de la matière.

D'autres solutions visent l'ajout d'éléments additionnels à l'intérieur du capteur pour permettre une compensation du balourd par des moyens mécaniques.

Encore d'autres solutions proposent une commande directe des moyens d'excitation. Cependant, une telle commande est difficile à mettre en œuvre, car elle dépend d'un grand nombre de paramètres, tels que la température, la pression, etc.

Li Cheng et al. dans « A Digital Calibration Technique of MEMS Gyroscope for Closed-Loop Mode-Matching Control", Mircomachines, vol.10, no.8, 25 juin 2019, Chinwuba Ezekwe et al. dans « A Mode-MAtching Closed-Loop Vibratory Gyroscope Readout Interface With a 0.004/s/VHz Noise Floor Over a 50 Hz Band », IEEE Journal of Solid-State Circuits, vol.43, no.12 1 décembre 2019 et un article de l'IEEE intitule "IEEE Recommended Practice for Inertial Sensor Test Equipment, Instrumentation, Data Acquisition and Analysis", 1 janvier 2005, proposent des solutions pour répondre à ce problème.

Ces solutions peuvent ainsi encore être améliorées, car elles sont difficiles à mettre en œuvre et/ou ne permettent pas d'augmenter la fiabilité de la mesure du capteur angulaire inertiel de manière satisfaisante.

Ainsi, un objet de la présente invention est d'obtenir un procédé de calibrage d'un capteur angulaire inertiel micro-usiné qui est simple à mettre en œuvre, tout en obtenant une précision de mesure satisfaisante du capteur.

À cet effet, l'invention a pour objet un procédé de calibrage d'un capteur angulaire inertiel micro-usiné comprenant un support, au moins une masse vibrante mobile par rapport au support, au moins un transducteur d'excitation d'un mouvement de vibration de la masse vibrante, au moins un transducteur de détection d'une vibration de la masse vibrante, et au moins un transducteur électrostatique apte à appliquer une raideur électrostatique ajustable à la masse vibrante, le procédé de calibrage comprenant les étapes de :

- réception par le capteur angulaire d'une excitation vibratoire prédéterminée émise par un dispositif d'excitation ;
- mesure par le transducteur de détection de la vibration de la masse vibrante, pour obtenir un signal de mesure à partir de ladite mesure par le transducteur de détection ;
- transformation du signal de mesure sur une fenêtre temporelle prédéterminée dudit signal de mesure en une densité spectrale de puissance ;
- détermination d'au moins une valeur, dite valeur de bruit, en fonction d'une partie de ladite densité spectrale de puissance comprenant une fréquence inférieure ou égale à une fréquence prédéterminée ;
- réglage de la raideur électrostatique par une boucle de rétroaction recevant en entrée la valeur de bruit et fournissant en sortie un signal de commande au transducteur électrostatique comprenant la raideur électrostatique à appliquer à la masse vibrante minimisant la valeur de bruit, de préférence minimisant l'amplitude de la valeur de bruit ;
- application de la raideur électrostatique par le transducteur électrostatique conformément au signal de commande.

Le procédé de calibrage permet en effet un calibrage très simple et fiable du capteur angulaire inertiel, car le réglage par la boucle de rétroaction permet au moins de réduire, voire d'annuler, la sensibilité du capteur angulaire à des vibrations, notamment à des vibrations linéaires et acoustiques. Cela permet notamment de compenser un balourd de la ou des masses du capteur causant une telle sensibilité.

Aussi, le calibrage selon le procédé de calibrage est particulièrement fiable puisque la valeur de bruit présente uniquement des basses fréquences relatives à la présence d'un balourd de la ou des masses du capteur lors de la réception de l'excitation vibratoire prédéterminée.

Suivant d'autres aspects avantageux de l'invention, le procédé de calibrage comprend une ou plusieurs des caractéristiques suivantes, prise(s) isolément ou suivant toutes les combinaisons techniquement possibles :

- le dispositif d'excitation est distinct du transducteur d'excitation ;
- le capteur angulaire comprend au moins deux masses vibrantes mobiles par rapport au support, et mobiles l'une par rapport à l'autre, suspendues par des ressorts de suspension à des points d'ancrage fixes du support et couplées entre elles par des ressorts de couplage pour vibrer en opposition de phase, le capteur angulaire comprenant, respectivement pour chaque masse vibrante, au moins un transducteur d'excitation, et au moins un transducteur de détection, l'étape de mesure comprenant la mesure de la vibration de chaque masse vibrante par le transducteur de détection respectif, le signal de mesure étant obtenu à partir de la mesure de la vibration de chaque masse vibrante ;
- le capteur angulaire comprend au moins un transducteur électrostatique respectivement pour chaque masse vibrante ; et l'étape de réglage comprend la fourniture, à chaque transducteur électrostatique, du signal de commande pour appliquer la raideur électrostatique respective à chaque masse vibrante minimisant la valeur de bruit ;
- le signal de commande comprend, pour chaque masse vibrante, une raideur électrostatique différente l'une par rapport à l'autre pour tenir compte d'un balourd des masses vibrantes ;
- l'une des masses vibrantes est appelée masse externe, et l'autre des masses vibrantes est appelée masse interne ; et, lors de l'étape de réglage, la boucle de rétroaction fournit le signal de commande comprenant des raideurs électrostatiques générant une force déterminée comme suit :

$$(Kti - Kte)\frac{(Xi+Xe)}{2} + \frac{Kti+Kte}{2}(Xi - Xe),$$

où : *Kti* est une somme de raideurs électrostatiques à appliquer sur la masse interne, *Kte* est une somme de raideurs électrostatiques à appliquer sur la masse externe, *Xi* est un déplacement de la masse interne, et *Xe* est un déplacement de la masse externe ;

- ladite force annule des forces dites perturbantes suivantes : $(Mi - Me)\frac{(\ddot{Xi}+\ddot{Xe})}{2}$ et $(Ki - Ke)\frac{(Xi+Xe)}{2}$, où *Mi* est la masse de la masse interne, *Me* est la masse de la masse externe, $\ddot{Xi}$ est l'accélération de la masse interne, $\ddot{Xe}$ est l'accélération de la masse externe, *Ki* est une somme de raideurs desdits ressorts de suspension reliant la masse interne au support, et *Ke* est une somme de raideurs desdits ressorts de suspension reliant la masse externe au support ;
- l'étape de mesure comprend la mesure par le ou chaque transducteur de détection de la vibration de la ou chaque masse vibrante selon un premier axe dans un plan du support, et la mesure, pour la ou chaque masse vibrante, par un transducteur additionnel de détection de la vibration de la ou chaque masse vibrante selon un deuxième axe perpendiculaire au premier axe et compris dans ledit plan ;
- le signal de commande comprend la raideur électrostatique à appliquer selon le premier axe par le ou chaque transducteur électrostatique, pour la ou chaque masse vibrante, le signal de commande comprenant en outre la raideur électrostatique à appliquer selon le deuxième axe par un transducteur électrostatique additionnel, pour la ou chaque masse vibrante ;
- l'étape d'application comprend l'application de la raideur électrostatique respective par le ou chaque transducteur électrostatique selon le premier axe, et par le ou chaque transducteur électrostatique additionnel selon le deuxième axe, conformément au signal de commande ;
- le procédé de calibrage comprend au moins une répétition des étapes réception, de mesure, de transformation, de détermination, de réglage, d'application ;
- lors de la répétition, le signal de commande comprend une raideur électrostatique à appliquer selon une direction, dans le plan du support, distincte du premier axe et du deuxième axe ;
- le signal de commande comprend en outre une raideur électrostatique à appliquer par un transducteur électrostatique de compensation d'un biais en quadrature, le biais en quadrature correspondant à un couplage de raideur des ressorts de suspension selon le premier axe et le deuxième axe ;
- le dispositif d'excitation comprend au moins un élément parmi un haut-parleur, ur élément piézoélectrique et un pot vibrant ;
- la valeur de bruit est égale à une moyenne arithmétique d'une pluralité de valeurs de la densité spectrale de puissance à des fréquences inférieures ou égales à 0,1 Hz.

L'invention a également pour objet un système de calibrage configuré pour calibrer un capteur angulaire inertiel micro-usiné comprenant un support, au moins une masse vibrante mobile par rapport au support, au moins un transducteur d'excitation d'un mouvement de vibration de la masse vibrante, au moins un transducteur de détection d'une vibration de la masse vibrante, et au moins un transducteur électrostatique apte à appliquer une raideur électrostatique ajustable à la masse vibrante,

le système de calibrage comprenant un dispositif d'excitation configuré pour émettre une excitation vibratoire prédéterminée au capteur angulaire inertiel, et
le système de calibrage comprenant en outre un dispositif de calcul comprenant :

- un module de réception configuré pour recevoir un signal de mesure obtenu à partir d'une mesure de la vibration de la masse vibrante par le transducteur de détection ;
- un module de transformation configuré pour transformer le signal de mesure sur une fenêtre temporelle prédéterminée dudit signal de mesure en une densité spectrale de puissance ;
- un module de détermination configuré pour déterminer au moins une valeur, dite valeur de bruit, en fonction d'une partie de ladite densité spectrale de puissance comprenant une fréquence inférieure ou égale à une fréquence prédéterminée ;
- une boucle de rétroaction configurée pour régler la raideur électrostatique, la boucle de rétroaction étant configurée pour recevoir en entrée la valeur de bruit et pour fournir en sortie un signal de commande au transducteur électrostatique comprenant la raideur électrostatique à appliquer à la masse vibrante minimisant la valeur de bruit, de préférence minimisant l'amplitude de la valeur de bruit, et
- un module d'émission configuré pour émettre le signal de commande au capteur angulaire inertiel pour appliquer la raideur électrostatique par le transducteur électrostatique conformément au signal de commande.

Ces caractéristiques et avantages de l'invention apparaîtront à la lecture de la description qui va suivre, donnée uniquement à titre d'exemple non limitatif, et faite en référence aux dessins annexés, sur lesquels :

- [Fig 1] la figure 1 est une vue schématique d'un ensemble comprenant un capteur angulaire inertiel et un système de calibrage selon l'invention ;

- [Fig 2] la figure 2 est une vue schématique d'un exemple du capteur angulaire inertiel de la figure 1 ;

- [Fig 3] la figure 3 est une vue schématique d'un autre exemple du capteur angulaire inertiel de la figure 1 ; et

- [Fig 4] la figure 4 est un ordinogramme d'un procédé de calibrage mis en œuvre par le système de calibrage de la figure 1.

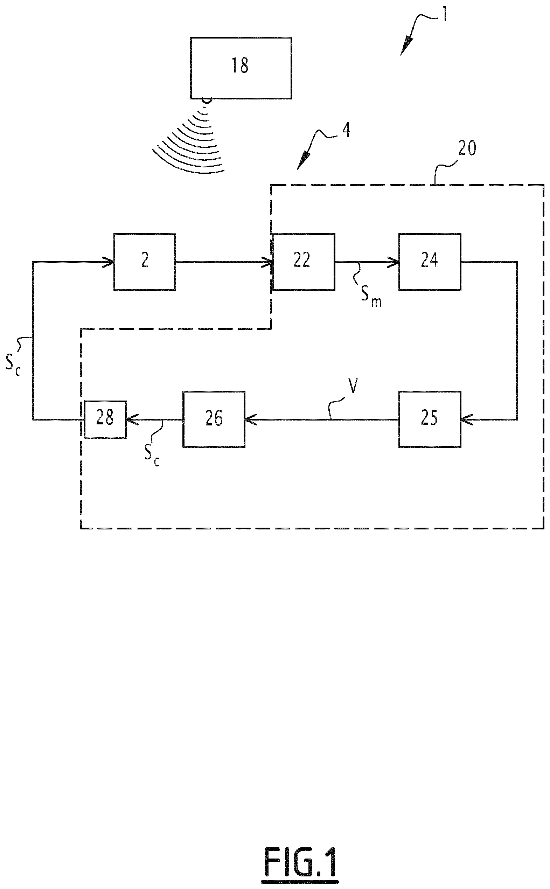

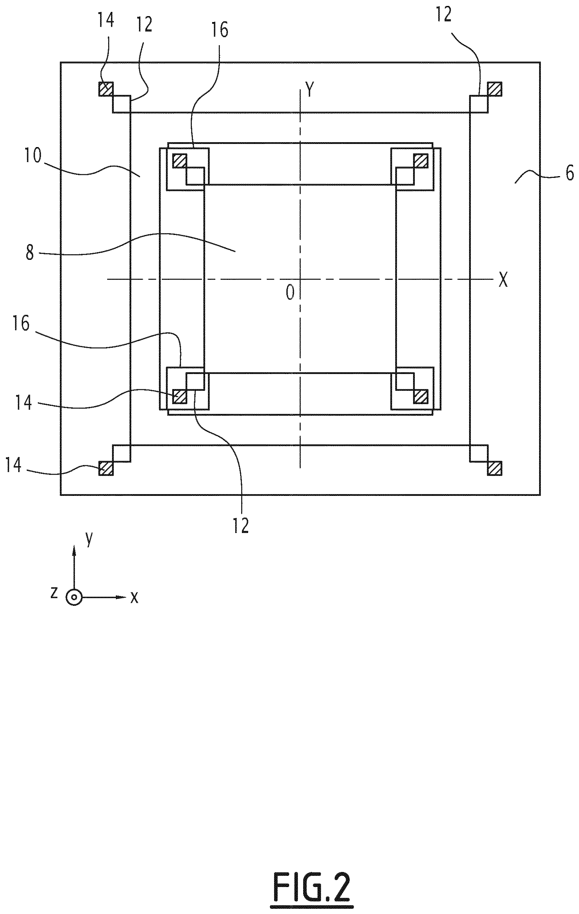

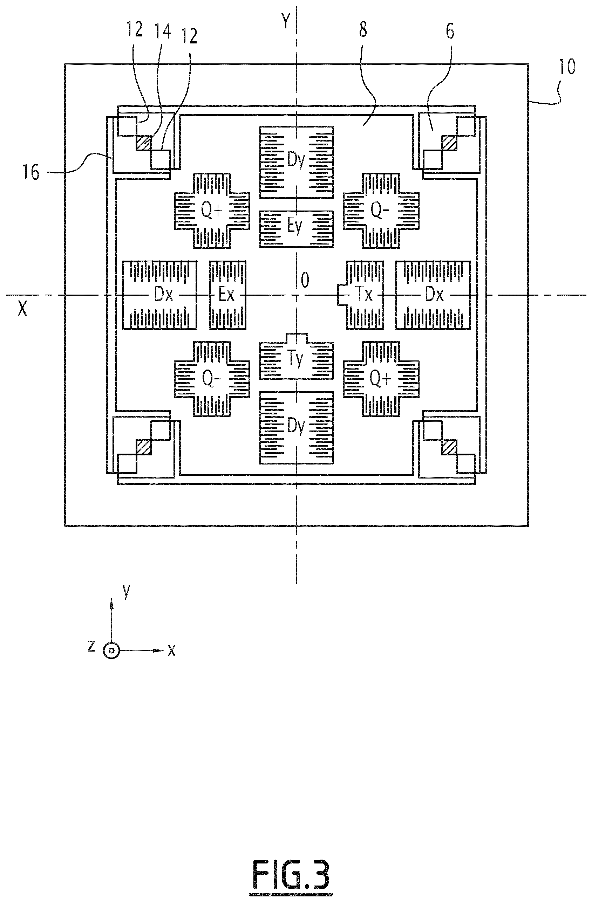

Sur la figure 1, un ensemble 1 comprend un capteur angulaire inertiel micro-usiné 2 et un système de calibrage 4 configuré pour calibrer le capteur angulaire 2. Par la suite, le capteur angulaire inertiel micro-usiné 2 est appelé capteur angulaire 2.
Le capteur angulaire 2 est par exemple un gyromètre configuré pour mesurer une vitesse angulaire. En variante ou en complément, le capteur angulaire 2 est un gyroscope pour mesurer une position angulaire.
Le capteur angulaire 2 est un capteur micro-usiné, et forme ainsi un microsystème électromécanique, également défini par son sigle MEMS (de l'anglais « Microelectromechanical systems »).
Le capteur angulaire 2 est en particulier un capteur destiné à être embarqué dans un véhicule, non représenté, par exemple dans un aéronef, un drone ou un navire.
Le capteur angulaire 2 est par exemple destiné à être embarqué dans une centrale de navigation, de pilotage ou de guidage du véhicule.
Le capteur angulaire 2 est en particulier un gyromètre de type diapason, notamment un gyromètre de type diapason à deux masses vibrantes.
Par « masse vibrante », il est entendu que la masse est apte à effectuer des oscillations, par exemple entraînées par des moyens décrits plus loin, et par effet Coriolis lors d'une rotation du capteur angulaire 2.
En référence aux exemples des figures 2 et 3, le capteur angulaire 2 comprend un support 6 s'étendant dans un plan du support 6, selon un premier axe X et un deuxième axe Y perpendiculaire au premier axe X.
Le capteur angulaire 2 comprend au moins une masse vibrante 8, 10, de préférence deux masses vibrantes 8, 10 disposées l'une autour de l'autre, pour former une masse appelée masse interne 8 et une masse appelée masse externe 10.
Les masses vibrantes 8, 10 sont mobiles par rapport au support 6, et mobiles l'une par rapport à l'autre. Des centres de gravité 0 des masses vibrantes 8, 10 sont notamment confondus au repos.

Le capteur angulaire 2 comprend des ressorts de suspension 12, par exemple quatre pour chaque masse vibrante 8, 10, suspendant chaque masse vibrante 8, 10 à un point d'ancrage 14 respectif qui est fixe par rapport au support 6.

Le capteur angulaire 2 comprend en outre des ressorts de couplage 16, par exemple quatre lorsque le capteur angulaire 2 comprend deux masses 8, 10, couplant les masses vibrantes 8, 10 entre elles pour permettre une vibration des masses 8, 10 en opposition de phase.

L'exemple du capteur angulaire 2 de la figure 3 diffère de l'exemple de la figure 2 en ce que, sur la figure 3, les ressorts de suspension 12 de la masse externe 10 sont orientés vers la masse interne 8 et fixés aux mêmes points d'ancrage 14 que les ressorts de suspension 12 correspondants de la masse interne 8.

Le capteur angulaire 2 comprend en outre, visible en particulier sur la figure 3, au moins un transducteur d'excitation Ex, Ey d'un mouvement de vibration de la masse vibrante 8, 10, au moins un transducteur de détection Dx, Dy d'une vibration de la masse vibrante 8, 10, et au moins un transducteur électrostatique Tx, Ty apte à appliquer une raideur électrostatique ajustable à la masse vibrante 8, 10.

Le fait que la raideur statique est « ajustable » indique que le transducteur électrostatique Tx, Ty est apte à modifier la raideur électrostatique.

Le capteur angulaire 2 comprend de préférence en outre au moins un transducteur électrostatique de compensation d'un biais en quadrature Q+, Q- configuré pour compenser un biais en quadrature. Le biais en quadrature correspond à un couplage d'une raideur des ressorts de suspension 12 selon le premier axe X et le deuxième axe Y.

Pour plus de visibilité, les transducteurs Ex, Ey, Dx, Dy, Tx, Ty, Q+ et Q- ne sont pas représentés sur la figure 2. De préférence, le capteur angulaire 2 selon l'exemple de la figure 2 comprend les mêmes transducteurs que ceux de l'exemple de la figure 3.

Un exemple de la disposition des transducteurs Ex, Ey, Dx, Dy, Tx, Ty, Q+ et Q- est décrit dans ce qui suit, en référence à la figure 3.

Le capteur angulaire 2 comprend par exemple un transducteur d'excitation Ex configuré pour exciter la masse interne 8 selon le premier axe X, et un transducteur d'excitation Ey configuré pour exciter la masse interne 8 selon le deuxième axe Y notamment lors d'une opération du capteur angulaire 2 par exemple pour obtenir une vitesse angulaire.

Le capteur angulaire 2 comprend par exemple deux transducteurs de détection Dx configurés pour détecter la vibration de la masse interne 8 selon le premier axe X, et deux transducteurs de détection Dy pour une telle détection selon le deuxième axe Y.

Le capteur angulaire 2 comprend en outre un transducteur électrostatique Tx apte à appliquer la raideur électrostatique ajustable à la masse interne 8 selon le premier axe X, et un transducteur électrostatique Ty correspondant pour le deuxième axe Y, également appelé transducteur électrostatique additionnel.

La capteur angulaire 2 comprend par exemple deux transducteurs électrostatiques de compensation Q+ configurés pour compenser un biais en quadrature positif, et deux transducteurs électrostatiques de compensation Q- configurés pour compenser un biais en quadrature négatif.

Sur la figure 3, les transducteurs Ex, Ey, Dx, Dy, Tx, Ty, Q+ et Q- sont représentés uniquement pour la masse interne 8. De préférence, le capteur angulaire 2 comprend en outre au moins un, de préférence chaque transducteur Ex, Ey, Dx, Dy, Tx, Ty, Q+ et Q-également pour la masse externe 10.

Par exemple, chaque transducteur Ex, Ey, Dx, Dy, Tx, Ty, Q+ et Q- est tel que décrit dans EP 2 960 625 A1.

Chaque transducteur Ex, Ey, Dx, Dy, Tx, Ty, Q+ et Q- est notamment un transducteur comprenant des peignes interdigités. Ces peignes interdigités comportent un peigne mobile solidaire de la masse interne 8, notamment fixe par rapport à la masse interne 8, et un peigne solidaire du support 6, et notamment fixe par rapport au support 6.

Chaque transducteur Ex, Ey, Dx, Dy, Tx, Ty, Q+ et Q- est configuré soit pour appliquer une force à la masse interne 8, en fonction d'une tension reçue, soit pour détecter un mouvement de la masse interne 8 en mesurant des variations de charge entre les peignes fixes et mobile.

Le système de calibrage 4 comprend un dispositif d'excitation 18 configuré pour émettre une excitation vibratoire prédéterminée au capteur angulaire 2, et un dispositif de calcul 20.

Le dispositif d'excitation 18 comprend par exemple un haut-parleur, un élément piézoélectrique et/ou un pot vibrant.

Le dispositif d'excitation 18 est par exemple configuré pour émettre au capteur angulaire 2 une excitation vibratoire d'une gamme de fréquences centrée autour d'une fréquence de résonance du dispositif d'excitation 18, par exemple d'une gamme de fréquences égale à +/-2kHz par rapport à la fréquence de résonance.

La fréquence de résonance du dispositif d'excitation 18 est une fréquence prédéterminée.

Par exemple, le dispositif d'excitation 18 est intégré dans un banc de calibrage, non représenté, permettant de positionner le capteur angulaire 2 à une position prédéterminée pour le calibrage par la réception de l'excitation vibratoire.

Selon un autre exemple, le dispositif d'excitation 18 est fixé au capteur angulaire 2, par exemple en étant disposé ensemble avec le capteur angulaire 2 dans un même boîtier. Cela permet par exemple un auto-calibrage du capteur angulaire 2.

Selon des exemples, le dispositif d'excitation 18 est disposé à l'extérieur ou à l'intérieur du capteur angulaire 2. Selon un exemple non représenté, le dispositif d'excitation 18 est intégré dans le capteur angulaire 2.

Le dispositif de calcul 20 comprend un module de réception 22, un module de transformation 24, un module de détermination 25, une boucle de rétroaction 26 et un module d'émission 28.

Le module de réception 22, le module de transformation 24, le module de détermination 25, la boucle de rétroaction 26 et le module d'émission 28 sont chacun par exemple intégrés dans au moins un calculateur.

Dans ce cas, chacun des éléments parmi le module de réception 22, le module de transformation 24, le module de détermination 25, la boucle de rétroaction 26 et le module d'émission 28 se présente au moins partiellement sous la forme d'un logiciel exécutable par un processeur et stocké dans une mémoire du calculateur.

En variante ou en complément, chacun des éléments parmi le module de réception 22, le module de transformation 24, le module de détermination 25, la boucle de rétroaction 26 et le module d'émission 28 est intégré, au moins partiellement, dans un dispositif physique, tel que par exemple un circuit logique programmable, tel qu'un FPGA (de l'anglais « Field Programmable Gate Array »), ou encore sous la forme d'un circuit intégré dédié, tel qu'un ASIC (de l'anglais « Application Specific Integrated Circuit »).

Le module de réception 22 est configuré pour recevoir un signal de mesure $S_m$ obtenu à partir d'une mesure de la vibration de la masse vibrante 8, 10 par chaque transducteur de détection Dx, Dy.

Le module de transformation 24 est configuré pour transformer le signal de mesure $S_m$ sur une fenêtre temporelle prédéterminée de ce signal de mesure $S_m$ en une densité spectrale de puissance.

Le module de détermination 25 est configuré pour déterminer au moins une valeur, dite valeur de bruit V, en fonction d'une partie de la densité spectrale de puissance comprenant une fréquence inférieure ou égale à une fréquence prédéterminée. Cette partie présente alors en particulier une fréquence inférieure ou égale à la fréquence prédéterminée.

La fréquence prédéterminée est par exemple égale à 0.1 Hz.

Selon d'autres exemples, la fréquence prédéterminée présente une valeur supérieure ou inférieure à 0.1 Hz.

La boucle de rétroaction 26 est configurée pour régler la raideur électrostatique à appliquer par chaque transducteur électrostatique Tx, Ty à la masse vibrante 8, 10.

La boucle de rétroaction 26 est configurée pour recevoir en entrée la valeur de bruit V et pour fournir en sortie un signal de commande $S_c$ au transducteur électrostatique Tx, Ty comprenant la raideur électrostatique à appliquer à la masse vibrante 8, 10 minimisant la valeur de bruit V. De préférence, la boucle de rétroaction 26 est configuré pour fournir en sortie le signal de commande $S_c$ minimisant l'amplitude de la valeur de bruit V.

Le module d'émission 28 est configuré pour émettre le signal de commande $S_c$ au capteur angulaire 2 pour appliquer la raideur électrostatique par chaque transducteur électrostatique Tx, Ty conformément au signal de commande $S_c$.

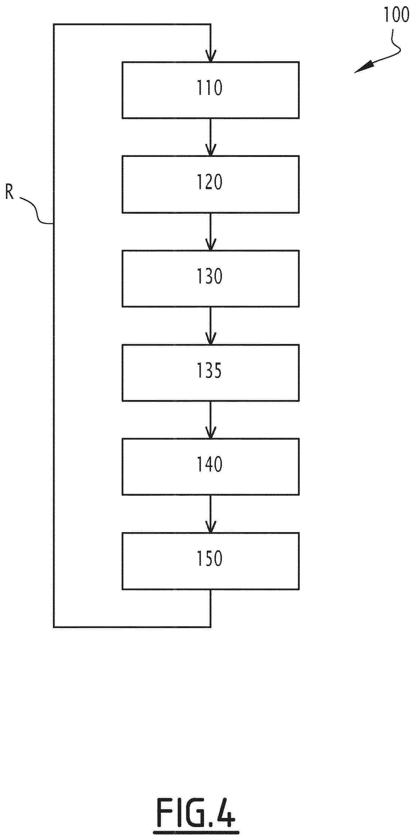

Un procédé de calibrage 100 du capteur angulaire 2 est maintenant décrit, en référence à la figure 4 montrant un ordinogramme de ce procédé.

Le procédé de calibrage 100 comprend une étape de réception 110, une étape de mesure 120, une étape de transformation 130, une étape de détermination 135, une étape de réglage 140 et une étape d'application 150.

Lors de l'étape de réception 110, le capteur angulaire 2 reçoit l'excitation vibratoire prédéterminée émise par le dispositif d'excitation 18 qui est distinct du transducteur d'excitation Ex, Ey.

Chaque masse vibrante 8, 10 est soumise à des différentes forces lors de l'étape de réception 110. Un exemple est décrit ci-après.

Chaque masse vibrante 8, 10 est soumise à des forces de rappel par les ressorts de suspension 12 reliant chaque masse vibrante 8, 10 au support 6. Les ressorts de suspension 12 engendrent une somme de raideurs Ki appliquées à la masse interne 8 et une somme de raideurs Ke appliquées à la masse externe 10.

La somme des raideurs Ki appliquées sur la masse interne 8 par les ressorts de suspension 12 de la masse interne 8 est par exemple définie comme suit :

$$Ki = \begin{bmatrix} Kxi & Kxyi \\ Kxyi & Kyi \end{bmatrix},$$

où

Kxi est la raideur selon le premier axe X générée par les ressorts de suspension 12 reliant la masse interne 8 au support 6 ;

Kyi est la raideur selon le deuxième axe Y générée par les ressorts de suspension 12 reliant la masse interne 8 au support 6 ;

Kxyi représente la raideur en quadrature formant un couplage entre le premier axe X et deuxième axe Y.

La somme des raideurs Ke appliquées sur la masse externe 10 est définie de manière équivalente, avec l'indice e au lieu de i :

$$Ke = \begin{bmatrix} Kxe & Kxye \\ Kxye & Kye \end{bmatrix}.$$

On définit en outre :

$$Xi = \begin{bmatrix} xi \\ yi \end{bmatrix}$$

comme étant le déplacement de la masse interne 8, et

$$Xe = \begin{bmatrix} xe \\ ye \end{bmatrix}$$

comme celui de la masse externe 10.

Chaque masse vibrante 8, 10 est en outre soumise à des forces générées par les transducteurs électrostatiques Tx, Ty. Les transducteurs électrostatiques Tx, Ty engendrent une somme de raideurs Kti appliquées à la masse interne 8 et une somme de raideurs Kte appliquées à la masse externe 10.

La somme des raideurs Kti appliquées sur la masse interne 8 est par exemple définie comme suit :

$$Kti = \begin{bmatrix} Ktxi & Ktxyi \\ Ktxyi & Ktyi \end{bmatrix},$$

où

$Ktxi$ est la raideur selon le premier axe X générée par le ou chaque transducteur électrostatique Tx selon l'axe X ;
$Ktyi$ est la raideur selon le premier axe X générée par le ou chaque transducteur électrostatique Ty selon l'axe Y.

La somme des raideurs Kte appliquées sur la masse externe 10 est définie de manière équivalente avec l'indice e au lieu de l'indice i.

La masse interne 8 est par exemple soumise à une force oscillante $F_{oscillant}$ qui est définie comme suit :

$$Mi.\ddot{X}i + Ki.Xi = F_{oscillant},$$

où

$Mi$ est la masse de la masse interne 8 ;
$\ddot{X}i$ est l'accélération de la masse interne 8.

De même, la masse externe 10 présente par exemple une force oscillante $F_{oseillant}$ qui est définie comme suit :

$$Me.\ddot{X}e + Ke.Xe = F_{oscillant},$$

où

$Me$ est la masse de la masse externe 10 ;
$\ddot{X}e$ est l'accélération de la masse externe 10.

L'homme du métier comprendra que ces définitions des forces oscillantes sont des définitions simplifiées, ne tenant pas compte de certaines forces, par exemple des forces de couplages entre la masse interne et externe 8, 10, des forces de Coriolis, des écarts de force d'excitation appliquées à chaque masse.

A partir des premiers termes $Mi.\ddot{X}i$ et $Me.\ddot{X}e$ des équations de force oscillante $F_{oseillant}$ pour chaque masse 8, 10, on a :

$$Mi.\ddot{X}i - Me.\ddot{X}e = (Mi - Me)\frac{(\ddot{X}i+\ddot{X}e)}{2} + \frac{Mi+Me}{2}(\ddot{X}i - \ddot{X}e).$$

Cette équation présente notamment une accélération en phase $\frac{(\ddot{X}i+\ddot{X}e)}{2}$, accélération moyenne des deux masses 8, 10, associée à la différence de masse *(Mi - Me)* et une accélération en opposition de phase $(\ddot{X}i - \ddot{X}e)$, associée à la masse moyenne $\frac{Mi+Me}{2}$,

On considère maintenant les deuxièmes termes *Ki. Xi* et *Ke. Xe* des équations de force oscillante $F_{oscillant}$ pour chaque masse 8, 10. Ces termes sont relatifs aux forces engendrées par les ressorts de suspension 12 reliant la masse interne 8 et externe 10 au support 6.

Le mouvement $\frac{(Xi+Xe)}{2}$ décrit ci-après est entraîné par le dispositif d'excitation 18.

On a :

$$\begin{bmatrix} Kxi & Kxyi \\ Kxyi & Kyi \end{bmatrix}\begin{bmatrix} xi \\ yi \end{bmatrix} - \begin{bmatrix} Kxe & Kxye \\ Kxye & Kye \end{bmatrix}\begin{bmatrix} xe \\ ye \end{bmatrix} = Ki.Xi - Ke.Xe$$

$$= (Ki - Ke)\frac{(Xi + Xe)}{2} + \frac{Ki + Ke}{2}(Xi - Xe)$$

Soit :

$$\frac{Mi+Me}{2}(\ddot{X}i - \ddot{X}e) + \frac{Ki+Ke}{2}(Xi - Xe) = -(Mi - Me)\frac{(\ddot{X}i+\ddot{X}e)}{2} - (Ki - Ke)\frac{(Xi+Xe)}{2}.$$

Lors de l'étape de réception 110, le mouvement de la masse interne et externe 8, 10 présente notamment deux forces perturbantes $(Mi - Me)\frac{(\ddot{X}i+\ddot{X}e)}{2}$ et $(Ki - Ke)\frac{(Xi+Xe)}{2}$, liées à une différence des masses 8, 10 et à une différence des sommes des raideurs des ressorts de suspension 12. Ces forces perturbantes sont notamment réduites, de préférence annulées, par la boucle de rétroaction 26 lors de l'étape de réglage 140, décrite plus loin.

Lors de l'étape de mesure 120, le ou chaque transducteur de détection Dx, Dy mesure la vibration de la masse vibrante 8, 10, pour obtenir le signal de mesure $S_m$ à partir de la mesure par le ou chaque transducteur de détection Dx, Dy.

Le signal de mesure $S_m$ est en particulier un signal fourni en sortie du capteur angulaire 2, par exemple une vitesse angulaire ou une position angulaire.

Par exemple, le capteur angulaire 2 détermine, en fonction de l'amplitude de la vibration de la masse vibrante 8, 10, une vitesse angulaire correspondant au signal de mesure $S_m$.

Par exemple, lorsque le capteur angulaire 2 est un gyroscope, le signal de mesure $S_m$ est une mesure de la direction de la vibration de la masse vibrante 8, 10, dans le plan du support 6, mesurée par les transducteurs de détection Dx, Dy. A titre d'exemple, chaque transducteur de détection Dx, Dy mesure l'amplitude de la vibration selon l'axe correspondante X et Y, et le capteur angulaire 2 obtient le signal de mesure $S_m$ à partir de ces mesures.

Lorsque le capteur angulaire 2 est un gyromètre, le signal de mesure $S_m$ est par exemple proportionnel à des forces d'excitation appliquées par le ou chaque transducteur d'excitation Ex, Ey. Le capteur angulaire 2 détermine ces forces d'excitation notamment en fonction de la mesure de la vibration de la masse vibrante 8, 10 par le ou chaque transducteur de détection Dx, Dy.

Par exemple, l'étape de mesure 120 comprend la mesure par le transducteur de détection Dx de la vibration de la masse interne 8 selon le premier axe X, et la mesure par transducteur de détection Dy, également appelé transducteur additionnel de détection, de la vibration de la masse interne 8 selon le deuxième axe Y.

Selon un exemple, l'étape de mesure 120 comprend des mesures selon une direction quelconque dans le plan du support 6, notamment différente de l'axe X ou Y.

Notamment, cette vibration correspond au déplacement dénommé *Xi* ci-dessus et éventuellement ses dérivées de premier et/ou second ordre(s).

De préférence, l'étape de mesure 120 comprend en outre la mesure de la vibration de la masse externe 10 selon le premier axe X et le deuxième axe Y par les transducteurs de détection correspondants, non représentés.

Notamment, cette vibration correspond au déplacement dénommé *Xe* ci-dessus, et éventuellement ses dérivées de premier et/ou second ordre(s).

Dans le cas de deux masses, à savoir la masse interne 8 et la masse externe 10, l'étape de mesure 120 comprend en particulier la mesure d'un mouvement de chaque masse 8, 10 selon le premier axe X, et selon le deuxième axe Y. Par exemple, le capteur angulaire 2 détermine le signal de mesure $S_m$ à partir de la différence du mouvement, notamment en opposition de phase, entre la masse interne 8 et la masse externe 10 selon le premier axe X, et la différence du mouvement entre ces masses 8, 10 selon le deuxième axe Y.

Selon un exemple, le capteur angulaire 2 détermine une direction résultante de la vibration de chaque masse vibrante 8, 10, dans le plan du support 6, à partir des mesures des transducteurs de détection Dx et Dy, pour obtenir le signal de mesure $S_m$.

Lors de l'étape de transformation 130, le module de transformation 24 transforme le signal de mesure $S_m$ sur une fenêtre temporelle prédéterminée de ce signal de mesure $S_m$ en une densité spectrale de puissance.

La densité spectrale de puissance est notamment la densité spectrale de puissance du signal de mesure $S_m$.

Le module de transformation 24 obtient la densité spectrale de puissance par exemple par application de la méthode du périodogramme sur le signal de mesure $S_m$.

La densité spectrale de puissance présente la répartition en fréquence de la puissance du signal de mesure $S_m$ selon les fréquences de ce signal. Par exemple, la densité spectrale de puissance présente l'unité :

$$\frac{°/s}{\sqrt{Hz}},$$

où

°/s est la vitesse de rotation obtenu par mesure par le capteur angulaire 2 en degrés par seconde ; et
Hz est la fréquence en Hertz.

Lors de l'étape de détermination 135, le module de détermination 25 détermine la valeur de bruit V, en fonction d'une partie de la densité spectrale de puissance comprenant une fréquence inférieure ou égale à la fréquence prédéterminée, par exemple 0,1 Hz.

Cette partie présente alors en particulier une fréquence inférieure ou égale à la fréquence prédéterminée.

Par exemple, le module de détermination 25 détermine la moyenne arithmétique de chaque valeur de la densité spectrale de puissance inférieure ou égale à la fréquence prédéterminée pour obtenir la valeur de bruit V.

Selon un autre exemple, le module de détermination 25 détermine une variance d'Allan pour obtenir la valeur de bruit V.

Selon un exemple, le module de détermination 25 détermine une pluralité de valeurs de bruit V, correspondant par exemple à des directions différentes de mesure dans le plan du support 6.

Lors de l'étape de réglage 140, la boucle de rétroaction 26 règle la raideur électrostatique à appliquer sur chaque masse 8, 10.

Par « une raideur électrostatique », il est entendu une raideur qui est constante pendant une durée prédéterminée et qui est appliquée à la masse vibrante 8, 10, notamment constante pendant une durée supérieure de plusieurs ordres de grandeur par rapport à une période d'oscillation de l'excitation vibratoire prédéterminée générée par le dispositif d'excitation 18.

Selon un exemple, la raideur électrostatique dépend d'une direction dans le plan du support 6 formé par les axes X et Y et/ou d'une température du capteur angulaire 2.

La boucle de rétroaction 26 reçoit en entrée la valeur de bruit V et fournit en sortie le signal de commande $S_c$ à chaque transducteur électrostatique Tx, Ty comprenant la raideur électrostatique à appliquer à la masse vibrante 8, 10 respective, minimisant la valeur de bruit V.

De préférence, la boucle de rétroaction 26 minimise l'amplitude de la valeur de bruit V en fournissant le signal de commande $S_c$.

La boucle de rétroaction 26 met notamment en œuvre une rétroaction négative qui tend à réduire la valeur de bruit V.

Par exemple, le signal de commande $S_c$ comprend une raideur électrostatique différente l'une par rapport à l'autre pour chaque masse vibrante 8, 10 pour tenir compte d'un balourd des masses vibrantes 8, 10, de préférence une raideur différente selon l'axe X par rapport à l'axe Y.

Dans l'exemple d'un capteur angulaire 2 comprenant les deux masses vibrantes 8, 10, le balourd correspond à la différence de masse entre les masses vibrantes 8 et 10.

Le signal de commande $S_c$ comprend par exemple la raideur électrostatique à appliquer selon l'axe X par le transducteur électrostatique Tx, et la raideur électrostatique à appliquer selon l'axe Y par le Ty transducteur électrostatique additionnel, pour chaque masse vibrante 8, 10.

Par exemple, le signal de commande $S_c$ comprend en outre une raideur électrostatique à appliquer par chaque transducteur électrostatique de compensation du biais en quadrature Q+, Q-.

Par exemple, la boucle de rétroaction 26 fournit le signal de commande $S_c$ comprenant des raideurs électrostatiques générant une force déterminée comme suit :

$$(Kti - Kte)\frac{(Xi+Xe)}{2} + \frac{Kti+Kte}{2}(Xi - Xe).$$

En particulier, cette force déterminée minimise, et de préférence annule, les forces perturbantes suivantes :

$$(Mi - Me)\frac{(\ddot{X}i+\ddot{X}e)}{2} \text{ et } (Ki - Ke)\frac{(Xi+Xe)}{2}.$$

Lors de l'étape d'application 150, le transducteur électrostatique Tx, Ty applique la raideur électrostatique conformément au signal de commande $S_c$.

En particulier, le transducteur électrostatique Tx applique la raideur électrostatique respective selon l'axe X, et le transducteur électrostatique Ty selon l'axe Y, conformément au signal de commande $S_c$.

Les transducteurs électrostatiques Tx, Ty annulent notamment les termes diagonaux des forces perturbantes, en appliquant les raideurs suivantes :

$$(Kti - Kte)\frac{(Xi+Xe)}{2} = \begin{bmatrix} Ktxi - Ktxe & 0 \\ 0 & Ktyi - Ktye \end{bmatrix}\frac{(Xi+Xe)}{2}.$$

Par exemple, chaque transducteur électrostatique de compensation Q+, Q- applique la raideur électrostatique respective conformément au signal de commande $S_c$.

Les transducteurs électrostatiques de compensation Q+, Q- annulent notamment les termes non-diagonaux des forces perturbantes.

Par exemple, le procédé de calibrage 100 est répété plusieurs fois, comme notamment illustré par la flèche R sur la figure 4.

Par exemple, lors de la répétition du procédé de calibrage 100, le dispositif d'excitation 18 émet en permanence une excitation vibratoire prédéterminée au capteur angulaire 2.

Après une première exécution des étapes 110, 120, 130, 135, 140 et 150 et l'application de la raideur électrostatique conformément au signal de commande $S_c$, la valeur de bruit V, et notamment son amplitude, est, lors d'une deuxième exécution, réduite par rapport à la première exécution.

De préférence, le procédé de calibrage 100 est répété jusqu'à l'obtention d'une valeur prédéterminée de la valeur de bruit V.

Selon un exemple, le procédé de calibrage 100 comprend au moins une répétition des étapes réception 110, de mesure 120, de transformation 130, de détermination 135, de réglage 140, d'application 150.

Par exemple, le signal de commande $S_c$ comprend une raideur électrostatique à appliquer selon une direction, dans le plan du support 6, qui est distincte du premier axe X et du deuxième axe Y.

Par exemple, le procédé de calibrage 100 comprend la mise en œuvre de plusieurs répétitions des étapes réception 110, de mesure 120, de transformation 130, de détermination 135, de réglage 140, d'application 150. Dans ce cas, lors d'une répétition donnée, le signal de commande $S_c$ comprend une raideur électrostatique à appliquer selon une première direction qui est distincte par rapport à une deuxième direction. La deuxième direction correspond notamment à la direction de la raideur électrostatique à appliquer lors d'une répétition précédente. La première et deuxième direction sont comprises dans le plan du support 6, et présentent par exemple un angle prédéterminé entre elles, tel que 10°.

Bien entendu, d'autres modes de réalisation que ceux décrits ci-dessus peuvent être envisagés.

Par exemple, le capteur angulaire 2 est un capteur différent de celui décrit ci-dessus. Par exemple, le capteur angulaire 2 comprend uniquement une masse vibrante ou plus que deux masses vibrantes.

Le système de calibrage 4 et le procédé de calibrage 100 selon l'invention présentent un grand nombre d'avantages.

En particulier, le système de calibrage 4 et le procédé de calibrage 100 permettent un calibrage du capteur angulaire 2 qui est simple à mettre en œuvre grâce à l'excitation par le dispositif d'excitation 18 qui est distinct du transducteur d'excitation Ex, Ey, et grâce au réglage à partir de la mesure en sortie du capteur angulaire 2.

Aussi, le calibrage par le procédé selon l'invention permet d'obtenir une bonne précision de mesure du capteur angulaire 2, car le bruit basse fréquence de la mesure du capteur angulaire 2 est réduit par la rétroaction mise en œuvre par la boucle de rétroaction 26.

Dans l'exemple selon lequel le capteur reçoit une excitation vibratoire prédéterminée émise par un dispositif d'excitation qui est distinct du transducteur d'excitation, la mise en œuvre du procédé de calibration est particulièrement simple, car il suffit de positionner le capteur angulaire par exemple dans une zone prédéfinie pour recevoir cette excitation pour le calibrage, notamment en l'absence d'ajout d'éléments de compensation à l'intérieur du capteur.

**Revendications**

1. Procédé de calibrage (100) d'un capteur angulaire inertiel micro-usiné (2) comprenant un support (6), au moins une masse vibrante (8, 10) mobile par rapport au support (6), au moins un transducteur d'excitation (Ex, Ey) d'un mouvement de vibration de la masse vibrante (8, 10), au moins un transducteur de détection (Dx, Dy) d'une vibration de la masse vibrante (8, 10), et au moins un transducteur électrostatique (Tx, Ty) apte à appliquer une raideur électrostatique ajustable à la masse vibrante (8, 10), le procédé de calibrage (100) comprenant les étapes de :

   - réception (110) par le capteur angulaire (2) d'une excitation vibratoire prédéterminée émise par un dispositif d'excitation (18) ;
   - mesure (120) par le transducteur de détection (Dx, Dy) de la vibration de la masse vibrante (8, 10), pour obtenir un signal de mesure ($S_m$) à partir de ladite mesure par le transducteur de détection (Dx, Dy) ;

   le procédé étant **caractérisé en ce qu'**il comprend les étapes de :

   - transformation (130) du signal de mesure ($S_m$) sur une fenêtre temporelle prédéterminée dudit signal de mesure ($S_m$) en une densité spectrale de puissance ;
   - détermination (135) d'au moins une valeur, dite valeur de bruit (V), en fonction d'une partie de ladite densité spectrale de puissance comprenant une fréquence inférieure ou égale à une fréquence prédéterminée ;
   - réglage (140) de la raideur électrostatique par une boucle de rétroaction (26) recevant en entrée la valeur de bruit (V) et fournissant en sortie un signal de commande ($S_c$) au transducteur électrostatique (Tx, Ty) comprenant la raideur électrostatique à appliquer à la masse vibrante (8, 10) minimisant la valeur de bruit (V), de préférence minimisant l'amplitude de la valeur de bruit (V) ;
   - application (150) de la raideur électrostatique par le transducteur électrostatique (Tx, Ty) conformément au signal de commande ($S_c$).

2. Procédé de calibrage selon la revendication 1, dans lequel le dispositif d'excitation (18) est distinct du transducteur d'excitation (Ex, Ey).

3. Procédé de calibrage selon la revendication 1 ou la revendication 2, dans lequel le capteur angulaire (2) comprend au moins deux masses vibrantes (8, 10) mobiles par rapport au support (6), et mobiles l'une par rapport à l'autre, suspendues par des ressorts de suspension (12) à des points d'ancrage (14) fixes du support (6) et couplées entre elles par des ressorts de couplage (16) pour vibrer en opposition de phase, le capteur angulaire (2) comprenant, respectivement pour chaque masse vibrante (8, 10), au moins un transducteur d'excitation (Ex, Ey), et au moins un transducteur de détection (Dx, Dy) ;
   dans lequel l'étape de mesure (120) comprend la mesure de la vibration de chaque masse vibrante (8, 10) par le transducteur de détection (Dx, Dy) respectif, le signal de mesure ($S_m$) étant obtenu à partir de la mesure de la vibration de chaque masse vibrante (8, 10).

4. Procédé de calibrage selon la revendication 3, dans lequel le capteur angulaire (2) comprend au moins un transducteur électrostatique (Tx, Ty) respectivement pour chaque masse vibrante (8, 10) ; et
   dans lequel l'étape de réglage (140) comprend la fourniture, à chaque transducteur électrostatique (Tx, Ty), du signal de commande ($S_c$) pour appliquer la raideur électrostatique respective à chaque masse vibrante (8, 10) minimisant la valeur de bruit (V).

5. Procédé de calibrage selon la revendication 4, dans lequel le signal de commande ($S_c$) comprend, pour chaque masse vibrante (8, 10), une raideur électrostatique différente l'une par rapport à l'autre pour tenir compte d'un balourd des masses vibrantes (8, 10).

6. Procédé de calibrage selon l'une quelconque des revendications 3 à 5, dans lequel l'une des masses vibrantes (8, 10) est appelée masse externe (10), et l'autre des masses vibrantes est appelée masse interne (8) ; et
   dans lequel, lors de l'étape de réglage (140), la boucle de rétroaction (26) fournit le signal de commande ($S_c$) comprenant des raideurs électrostatiques générant une force déterminée comme suit :

$$(Kti - Kte)\frac{(Xi+Xe)}{2} + \frac{Kti+Kte}{2}(Xi - Xe),$$

où :

Kti est une somme de raideurs électrostatiques à appliquer sur la masse interne (8),
Kte est une somme de raideurs électrostatiques à appliquer sur la masse externe (10),
Xi est un déplacement de la masse interne (8), et
Xe est un déplacement de la masse externe (10).

7. Procédé de calibrage selon la revendication 6, dans lequel ladite force annule des forces dites perturbantes suivantes :

$$(Mi - Me)\frac{(\ddot{X}i+\ddot{X}e)}{2} \text{ et } (Ki - Ke)\frac{(Xi+Xe)}{2},$$

où

Mi est la masse de la masse interne (8),
Me est la masse de la masse externe (10),
$\ddot{X}_i$ est l'accélération de la masse interne (8),
$\ddot{X}e$ est l'accélération de la masse externe (10),
Ki est une somme de raideurs desdits ressorts de suspension (12) reliant la masse interne (8) au support (6), et
Ke est une somme de raideurs desdits ressorts de suspension (12) reliant la masse externe (10) au support (6).

8. Procédé de calibrage selon l'une quelconque des revendications précédentes, dans lequel l'étape de mesure (120) comprend la mesure par le ou chaque transducteur de détection (Dx) de la vibration de la ou chaque masse vibrante (8, 10) selon un premier axe (X) dans un plan du support (6), et la mesure, pour la ou chaque masse vibrante (8, 10), par un transducteur additionnel de détection (Dy) de la vibration de la ou chaque masse vibrante (8, 10) selon un deuxième axe (Y) perpendiculaire au premier axe (X) et compris dans ledit plan.

9. Procédé de calibrage selon la revendication 8, dans lequel le signal de commande ($S_c$) comprend la raideur électrostatique à appliquer selon le premier axe (X) par le ou chaque transducteur électrostatique (Tx), pour la ou chaque masse vibrante (8, 10), le signal de commande ($S_c$) comprenant en outre la raideur électrostatique à appliquer selon le deuxième axe (Y) par un transducteur électrostatique additionnel (Ty), pour la ou chaque masse vibrante (8, 10) ; et
dans lequel l'étape d'application (150) comprend l'application de la raideur électrostatique respective par le ou chaque transducteur électrostatique (Tx) selon le premier axe (X), et par le ou chaque transducteur électrostatique additionnel (Ty) selon le deuxième axe (Y), conformément au signal de commande ($S_c$).

10. Procédé de calibrage selon la revendication 9, comprenant au moins une répétition des étapes réception (110), de mesure (120), de transformation (130), de détermination (135), de réglage (140), d'application (150), dans lequel, lors de la répétition, le signal de commande ($S_c$) comprend une raideur électrostatique à appliquer selon une direction, dans le plan du support (6), distincte du premier axe (X) et du deuxième axe (Y).

11. Procédé de calibrage selon l'une quelconque des revendications 8 à 10 prise en combinaison avec la revendication 3, dans lequel le signal de commande ($S_c$) comprend en outre une raideur électrostatique à appliquer par un transducteur électrostatique de compensation d'un biais en quadrature (Q+, Q-), le biais en quadrature correspondant à un couplage de raideur des ressorts de suspension (12) selon le premier axe (X) et le deuxième axe (Y).

12. Procédé de calibrage selon l'une quelconque des revendications précédentes, dans lequel le dispositif d'excitation (18) comprend au moins un élément parmi un haut-parleur, un élément piézoélectrique et un pot vibrant.

13. Procédé de calibrage selon l'une quelconque des revendications précédentes, dans lequel la valeur de bruit (V) est égale à une moyenne arithmétique d'une pluralité de valeurs de la densité spectrale de puissance à des fréquences inférieures ou égales à 0,1 Hz.

**14.** Système de calibrage (4) configuré pour calibrer un capteur angulaire inertiel micro-usiné (2) comprenant un support (6), au moins une masse vibrante (8, 10) mobile par rapport au support (6), au moins un transducteur d'excitation (Ex, Ey) d'un mouvement de vibration de la masse vibrante (8, 10), au moins un transducteur de détection (Dx, Dy) d'une vibration de la masse vibrante (8, 10), et au moins un transducteur électrostatique (Tx, Ty) apte à appliquer une raideur électrostatique ajustable à la masse vibrante (8, 10),

le système de calibrage (4) comprenant un dispositif d'excitation (18) configuré pour émettre une excitation vibratoire prédéterminée au capteur angulaire inertiel (2), et

le système de calibrage (4) comprenant en outre un dispositif de calcul (20) comprenant :

- un module de réception (22) configuré pour recevoir un signal de mesure ($S_m$) obtenu à partir d'une mesure de la vibration de la masse vibrante (8, 10) par le transducteur de détection (Dx, Dy) ;

le système étant **caractérisé en ce que** le dispositif de calcul comprend :

- un module de transformation (24) configuré pour transformer le signal de mesure ($S_m$) sur une fenêtre temporelle prédéterminée dudit signal de mesure ($S_m$) en une densité spectrale de puissance ;
- un module de détermination (25) configuré pour déterminer au moins une valeur, dite valeur de bruit (V), en fonction d'une partie de ladite densité spectrale de puissance comprenant une fréquence inférieure ou égale à une fréquence prédéterminée ;
- une boucle de rétroaction (26) configurée pour régler la raideur électrostatique, la boucle de rétroaction (26) étant configurée pour recevoir en entrée la valeur de bruit (V) et pour fournir en sortie un signal de commande ($S_c$) au transducteur électrostatique (Tx, Ty) comprenant la raideur électrostatique à appliquer à la masse vibrante (8, 10) minimisant la valeur de bruit (V), de préférence minimisant l'amplitude de la valeur de bruit (V), et
- un module d'émission (28) configuré pour émettre le signal de commande ($S_c$) au capteur angulaire inertiel (2) pour appliquer la raideur électrostatique par le transducteur électrostatique (Tx, Ty) conformément au signal de commande ($S_c$).

**Patentansprüche**

**1.** Verfahren zur Kalibrierung (100) eines mikrobearbeiteten Inertialwinkelsensors (2), umfassend einen Träger (6), mindestens eine schwingende Masse (8, 10), die in Bezug auf den Träger (6) beweglich ist, mindestens einen Erregungswandler (Ex, Ey) einer Schwingungsbewegung der schwingenden Masse (8, 10), mindestens einen Erfassungswandler (Dx, Dy) einer Schwingung der schwingenden Masse (8, 10), und mindestens einen elektrostatischen Wandler (Tx, Ty), der geeignet ist, um eine einstellbare elektrostatische Steifigkeit auf die schwingende Masse (8, 10) auszuüben, das Kalibrierungsverfahren (100) umfassend die folgenden Schritte:

- Empfangen (110), durch den Winkelsensor (2), einer vorbestimmten Schwingungserregung, die von einer Erregungsvorrichtung (18) emittiert wird;
- Messen (120), durch den Erfassungswandler (Dx, Dy), der Vibration der schwingenden Masse (8, 10), um ein Messsignal ($S_m$) anhand der Messung durch den Erfassungswandler (Dx, Dy) zu erlangen;

wobei das Verfahren **dadurch gekennzeichnet ist, dass** es folgende Schritte umfasst:

- Umwandeln (130) des Messsignals ($S_m$) über ein vorbestimmtes Zeitfenster des Messsignals ($S_m$) in eine spektrale Leistungsdichte;
- Bestimmen (135) von mindestens einem Wert, dem sogenannten Rauschwert (V), abhängig von einem Teil der spektralen Leistungsdichte, umfassend eine Frequenz, die kleiner als oder gleich wie eine vorbestimmte Frequenz ist;
- Einstellung (140) der elektrostatischen Steifigkeit durch eine Rückkopplungsschleife (26), die als Eingang den Rauschwert (V) empfängt und als Ausgang ein Steuersignal ($S_c$) an den elektrostatischen Wandler (Tx, Ty) bereitstellt, umfassend die elektrostatische Steifigkeit, die auf die schwingende Masse (8, 10) anzuwenden ist, sodass der Rauschwert (V) minimiert und vorzugsweise dessen Amplitude reduziert wird;
- Anwenden (150) der elektrostatischen Steifigkeit durch den elektrostatischen Wandler (Tx, Ty) gemäß dem Steuersignal ($S_c$).

**2.** Kalibrierungsverfahren nach Anspruch 1, wobei sich die Erregungsvorrichtung (18) von dem Erregungswandler (Ex, Ey) unterscheidet.

3. Kalibrierungsverfahren nach Anspruch 1 oder Anspruch 2, wobei der Winkelsensor (2) mindestens zwei schwingende Massen (8, 10) umfasst, die in Bezug auf den Träger (6) beweglich und in Bezug aufeinander beweglich sind, die durch Aufhängungsfedern (12) an festen Verankerungspunkten (14) des Trägers (6) aufgehängt und durch Kopplungsfedern (16) miteinander gekoppelt sind, um in Gegenphase zu schwingen, der Winkelsensor (2) jeweils umfassend für jede schwingende Masse (8, 10) mindestens einen Erregungswandler (Ex, Ey) und mindestens einen Erfassungswandler (Dx, Dy);

wobei der Messschritt (120) das Messen der Schwingung jeder schwingenden Masse (8, 10) durch den jeweiligen Erfassungswandler (Dx, Dy) umfasst und das Messsignal $S_m$) anhand der Messung der Schwingung jeder schwingenden Masse (8, 10) erlangt wird.

4. Kalibrierungsverfahren nach Anspruch 3, wobei der Winkelsensor (2) jeweils mindestens einen elektrostatischen Wandler (Tx, Ty) für jede schwingende Masse (8, 10) umfasst; und

wobei der Einstellschritt (140) das Bereitstellen, an jeden elektrostatischen Wandler (Tx, Ty), des Steuersignals ($S_c$) umfasst, um die jeweilige elektrostatische Steifigkeit auf jede schwingende Masse (8, 10) anzuwenden, um den Rauschwert (V) zu minimieren.

5. Kalibrierungsverfahren nach Anspruch 4, wobei das Steuersignal ($S_c$) für jede schwingende Masse (8, 10) untereinander unterschiedliche elektrostatische Steifigkeiten umfasst, um einer Unwucht der schwingenden Massen (8, 10) zu berücksichtigen.

6. Kalibrierungsverfahren nach einem der Ansprüche 3 bis 5, wobei eine der schwingenden Massen (8, 10) als äußere Masse (10) bezeichnet wird und die andere der schwingenden Massen als innere Masse (8) bezeichnet wird; und

wobei bei dem Einstellschritt (140) die Rückkopplungsschleife (26) das Steuersignal ($S_c$) bereitstellt, umfassend elektrostatische Steifigkeiten, die eine Kraft erzeugen, die wie folgt bestimmt wird:

$$(Kti - Kte) \quad \frac{(Xi+Xe)}{2} \quad + \quad \frac{Kti+Kte}{2}(Xi - Xe),$$

wobei:

*Kti* eine Summe von elektrostatischen Steifigkeiten ist, die auf die innere Masse (8) anzuwenden ist,
*Kte* eine Summe der elektrostatischen Steifigkeiten ist, die auf die äußere Masse (10) anzuwenden ist,
*Xi* eine Verschiebung der inneren Masse (8) ist, und
*Xe* eine Verschiebung der äußeren Masse (10) ist.

7. Kalibrierungsverfahren nach Anspruch 6, wobei die Kraft folgende sogenannte Störkräfte aufhebt:

$$(Mi - Me) \quad \frac{(\ddot{X}i+\ddot{X}e)}{2} \quad \text{und} \quad (Ki - Ke) \quad \frac{Xi+Xe}{2},$$

wobei

*Mi* die Masse der inneren Masse (8) ist,
*Me* die Masse der äußeren Masse (10) ist,
*Ẍi* die Beschleunigung der inneren Masse (8) ist,
*Ẍe* die Beschleunigung der äußeren Masse (10) ist,
*Ki* eine Summe der Steifigkeiten der Aufhängungsfedern (12) ist, die die innere Masse (8) mit dem Träger (6) verbinden, und
*Ke* eine Summe der Steifigkeiten der Aufhängungsfedern (12) ist, die die äußere Masse (10) mit dem Träger (6) verbinden.

8. Kalibrierungsverfahren nach einem der vorherigen Ansprüche, wobei der Messschritt (120) das Messen der Schwingung der oder jeder schwingenden Masse (8, 10) entlang einer ersten Achse (X) in einer Ebene des Trägers (6) durch den oder jeden Erfassungswandler (Dx), und das Messen, für die oder jede schwingende Masse (8, 10), durch einen zusätzlichen Erfassungswandler (Dy) der Schwingung der oder jeder schwingenden Masse (8, 10) entlang einer zweiten Achse (Y), die senkrecht zu der ersten Achse (X) ist und in der Ebene liegt, umfasst.

9. Kalibrierungsverfahren nach Anspruch 8, wobei das Steuersignal $S_c$ die elektro-statische Steifigkeit umfasst, die entlang der ersten Achse (X) von dem oder jedem elektro-statischen Wandler (Tx) für die oder jede schwingende Masse (8, 10) anzuwenden ist, das Steuersignal $S_c$ ferner umfassend die elektro-statische Steifigkeit, die entlang der zweiten Achse (Y) von einem zusätzlichen elektro-statischen Wandler (Ty) für die oder jede schwingende Masse (8, 10) anzuwenden ist; und
wobei der Anwendungsschritt (150) das Anwenden der jeweiligen elektrostatischen Steifigkeit durch den oder jeden elektrostatischen Wandler (Tx) entlang der ersten Achse (X) und durch den oder jeden zusätzlichen elektrostatischen Wandler (Ty) entlang der zweiten Achse (Y) gemäß dem Steuersignal ($S_c$) umfasst.

10. Kalibrierungsverfahren nach Anspruch 9, umfassend mindestens eine Wiederholung des Empfangs- (110), Mess- (120), Umwandlungs- (130), Bestimmungs-(135), Einstellungs- (140), Anwendungsschritt (150), wobei das Steuersignal $S_c$ bei der Wiederholung eine elektrostatische Steifigkeit umfasst, die in einer Richtung in der Ebene des Trägers (6) anzuwenden ist, die sich von der ersten Achse (X) und der zweiten Achse (Y) unterscheidet.

11. Kalibrierungsverfahren nach einem der Ansprüche 8 bis 10 in Kombination mit Anspruch 3, wobei das Steuersignal $S_c$ ferner eine elektrostatische Steifigkeit umfasst, die von einem elektrostatischen Wandler zur Kompensation eines Quadraturbias (Q+, Q-) anzuwenden ist, wobei das Quadraturbias einer Steifigkeitskopplung der Aufhängungsfedern (12) entlang der ersten Achse (X) und der zweiten Achse (Y) entspricht.

12. Kalibrierungsverfahren nach einem der vorherigen Ansprüche, wobei die Erregungsvorrichtung (18) mindestens eines von einem Lautsprecher, einem piezoelektrischen Element und einem schwingenden Topf umfasst.

13. Kalibrierungsverfahren nach einem der vorherigen Ansprüche, wobei der Rauschwert (V) gleich wie ein arithmetisches Mittel einer Vielzahl von Werten der spektralen Leistungsdichte bei Frequenzen von kleiner als oder gleich wie 0,1 Hz ist.

14. Kalibrierungssystem (4), das konfiguriert ist, um einen mikrobearbeiteten Inertialwinkelsensor (2) zu kalibrieren, umfassend einen Träger (6), mindestens eine in Bezug auf den Träger (6) bewegliche schwingende Masse (8, 10), mindestens einen Erregungswandler (Ex, Ey) einer Schwingungsbewegung der schwingenden Masse (8, 10), mindestens einen Erfassungswandler (Dx, Dy) einer Schwingung der schwingenden Masse (8, 10) und mindestens einen elektrostatischen Wandler (Tx, Ty), der in der Lage ist, eine einstellbare elektrostatische Steifigkeit auf die schwingende Masse (8, 10) anzuwenden,

das Kalibrierungssystem (4) umfassend eine Erregungsvorrichtung (18), die konfiguriert ist, um eine vorbestimmte Schwingungserregung an den Inertialwinkelsensor (2) zu emittieren, und
das Kalibriersystem (4) ferner umfassend eine Rechenvorrichtung (20), umfassend:

- ein Empfangsmodul (22), das konfiguriert ist, um ein Messsignal ($S_m$) zu empfangen, das anhand einer Messung der Schwingung der schwingenden Masse (8, 10) durch den Erfassungswandler (Dx, Dy) erlangt wird;

wobei das System **dadurch gekennzeichnet ist, dass** die Rechenvorrichtung Folgendes umfasst:

- ein Umwandlungsmodul (24), das konfiguriert ist, um das Messsignal ($S_m$) über ein vorbestimmtes Zeitfenster des Messsignals ($S_m$) in eine spektrale Leistungsdichte umzuwandeln;
- ein Bestimmungsmodul (25), das konfiguriert ist, um mindestens einen Wert, den sogenannten Rauschwert (V), abhängig von einem Teil der spektralen Leistungsdichte zu bestimmen, umfassend eine Frequenz, die kleiner als oder gleich wie eine vorbestimmte Frequenz ist;
- eine Rückkopplungsschleife (26), die konfiguriert ist, um die elektrostatische Steifigkeit einzustellen, wobei die Rückkopplungsschleife (26) konfiguriert ist, um als Eingang den Rauschwert (V) zu empfangen und als Ausgang ein Steuersignal ($S_c$) an den elektrostatischen Wandler (Tx, Ty) bereitzustellen, umfassend die auf die schwingende Masse (8, 10) anzuwendende elektrostatische Steifigkeit, um den Rauschwert (V) zu minimieren, vorzugsweise die Amplitude des Rauschwerts (V) zu minimieren, und
- ein Emissionsmodul (28), das konfiguriert ist, um das Steuersignal ($S_c$) an den Inertialwinkelsensor (2) zu emittieren, um die elektrostatische Steifigkeit durch den elektrostatischen Wandler (Tx, Ty) gemäß dem Steuersignal ($S_c$) anzuwenden.

**Claims**

1. A method of calibrating (100) a micromachined inertial angle sensor (2) comprising a support (6), at least one vibrating mass (8, 10) movable relative to the support (6), at least one excitation transducer (Ex, Ey) for exciting a vibrating movement of the vibrating mass (8, 10), at least one detection transducer (Dx, Dy) for detecting a vibration of the vibrating mass (8, 10), and at least one electrostatic transducer (Tx, Ty) capable of applying an adjustable electrostatic stiffness to the vibrating mass (8, 10), the calibration method (100) comprising the steps of:

   - receiving (110), by the angle sensor (2), a predetermined vibrational excitation emitted from an excitation device (18);
   - measuring (120), by the detection transducer (Dx, Dy), the vibration of the vibrating mass (8, 10), to obtain a measurement signal ($S_m$) based on the measurement by the detection transducer (Dx, Dy);

   the method being **characterized in that** it comprises the steps of:

   - converting (130) the measurement signal ($S_m$) over a predetermined time window of said measurement signal ($S_m$) into a power spectral density;
   - determining (135) at least one value, called noise value (V), as a function of a portion of said power spectral density comprising a frequency less than or equal to a predetermined frequency;
   - adjusting (140) the electrostatic stiffness, by a feedback loop (26) receiving as input the noise value (V) and providing as output a control signal ($S_c$) to the electrostatic transducer (Tx, Ty) comprising the electrostatic stiffness to be applied to the vibrating mass (8, 10) that minimises the noise value (V), preferably that minimises the amplitude of the noise value (V);
   - applying (150), by the electrostatic transducer (Tx, Ty), the electrostatic stiffness according to the control signal ($S_c$).

2. The calibration method according to claim 1, wherein the excitation device (18) is separate from the excitation transducer (Ex, Ey).

3. The calibration method according to claim 1 or claim 2, wherein the angle sensor (2) comprises at least two vibrating masses (8, 10) movable relative to the support (6), and movable relative to each other, suspended by suspension springs (12) from fixed anchoring points (14) of the support (6) and coupled together by coupling springs (16) to vibrate in phase opposition, the angle sensor (2) comprising, respectively for each vibrating mass (8, 10), at least one excitation transducer (Ex, Ey) and at least one detection transducer (Dx, Dy);
   wherein the measuring step (120) comprises measuring the vibration of each vibrating mass (8, 10) by the respective detection transducer (Dx, Dy), the measurement signal ($S_m$) being obtained from the measurement of the vibration of each vibrating mass (8, 10).

4. The calibration method according to claim 3, wherein the angle sensor (2) comprises at least one electrostatic transducer (Tx, Ty) for each vibrating mass (8, 10) respectively; and
   wherein the adjusting step (140) comprises supplying, to each electrostatic transducer (Tx, Ty), the control signal ($S_c$) for applying the respective electrostatic stiffness to each vibrating mass (8, 10) that minimises the noise value (V).

5. The calibration method according to claim 4, wherein the control signal ($S_c$) comprises, for each vibrating mass (8, 10), a different electrostatic stiffness with respect to each other to take into account an imbalance of the vibrating masses (8, 10).

6. The calibration method according to any one of claims 3 to 5, wherein one of the vibrating masses (8, 10) is referred to as the outer mass (10), and the other of the vibrating masses is referred to as the inner mass (8); and
   wherein, in the adjusting step (140), the feedback loop (26) provides the control signal ($S_c$) comprising electrostatic stiffnesses generating a force determined as follows:

$$(Kti - Kte)\frac{(Xi+Xe)}{2} + \frac{Kti+Kte}{2}(Xi - Xe),$$

where:

$Kti$ is a sum of electrostatic stiffnesses to be applied to the inner mass (8),

*Kte* is a sum of electrostatic stiffnesses to be applied to the outer mass (10),
*Xi* is a displacement of the inner mass (8), and
*Xe* is a displacement of the outer mass (10).

7. The calibration method according to claim 6, wherein said force cancels out the following so-called disturbing forces:

$$(Mi - Me)\frac{(\ddot{X}\iota + \ddot{X}e)}{2} \text{ and } (Ki - Ke)\frac{(Xi + Xe)}{2},$$

where

*Mi* is the mass of the inner mass (8),
*Me* is the mass of the outer mass (10),
$\ddot{X}\iota$ is the acceleration of the inner mass (8),
$\ddot{X}e$ is the acceleration of the outer mass (10),
*Ki* is a sum of stiffnesses of said suspension springs (12) connecting the inner mass (8) to the support (6), and
*Ke* is a sum of stiffnesses of said suspension springs (12) connecting the outer mass (10) to the support (6).

8. The calibration method according to any of the preceding claims, wherein the measuring step (120) comprises the or each detection transducer (Dx) measuring the vibration of the or each vibrating mass (8, 10) along a first axis (X) in a plane of the support (6) and an additional detection transducer (Dy) measuring, for the or each vibrating mass (8, 10), the vibration of the or each vibrating mass (8, 10) along a second axis (Y) perpendicular to the first axis (X) and comprised within said plane.

9. The calibration method according to claim 8, wherein the control signal ($S_c$) comprises the electrostatic stiffness to be applied along the first axis (X) by the or each electrostatic transducer (Tx), for the or each vibrating mass (8, 10), the control signal ($S_c$) further comprising the electrostatic stiffness to be applied along the second axis (Y) by an additional electrostatic transducer (Ty), for the or each vibrating mass (8, 10); and
wherein the applying step (150) comprises applying the respective electrostatic stiffness by the or each electrostatic transducer (Tx) along the first axis (X), and by the or each additional electrostatic transducer (Ty) along the second axis (Y), in accordance with the control signal ($S_c$).

10. The calibration method according to claim 9, comprising at least one repetition of the steps of receiving (110), measuring (120), transforming (130), determining (135), adjusting (140), applying (150), wherein, during the repetition, the control signal ($S_c$) comprises an electrostatic stiffness to be applied in a direction, in the plane of the support (6), distinct from the first axis (X) and the second axis (Y).

11. The calibration method according to any one of claims 8 to 10 taken in combination with claim 3, wherein the control signal ($S_c$) further comprises an electrostatic stiffness to be applied by an electrostatic transducer for compensation of a quadrature bias (Q+, Q-), the quadrature bias corresponding to a stiffness coupling of the suspension springs (12) along the first axis (X) and the second axis (Y).

12. The calibration method according to any of the preceding claims, wherein the excitation device (18) comprises at least one of a loudspeaker, a piezoelectric element, and a vibration generator.

13. The calibration method according to any of the preceding claims, wherein the noise value (V) is equal to an arithmetic mean of a plurality of power spectral density values at frequencies less than or equal to 0.1 Hz.

14. A calibration system (4) configured to calibrate a micromachined inertial angle sensor (2) comprising a support (6), at least one vibrating mass (8, 10) movable relative to the support (6), at least one excitation transducer (Ex, Ey) for exciting a vibrating movement of the vibrating mass (8, 10), at least one detection transducer (Dx, Dy) for detecting a vibration of the vibrating mass (8, 10), and at least one electrostatic transducer (Tx, Ty) capable of applying an adjustable electrostatic stiffness to the vibrating mass (8, 10),

the calibration system (4) comprising an excitation device (18) configured to emit a predetermined vibrational excitation to the inertial angle sensor (2), and
the calibration system (4) further comprising a computing device (20) comprising:

- a reception module (22) configured to receive a measurement signal (S$_m$) obtained from a measurement of the vibration of the vibrating mass (8, 10) by the detection transducer (Dx, Dy);

the system being **characterized in that** the computing device comprises:

- a transformation module (24) configured to transform the measurement signal (S$_m$) over a predetermined time window of said measurement signal (S$_m$) into a power spectral density;
- a determination module (25) configured to determine at least one value, called noise value (V), as a function of a portion of said power spectral density comprising a frequency less than or equal to a predetermined frequency;
- a feedback loop (26) configured to adjust the electrostatic stiffness, the feedback loop (26) being configured to receive as input the noise value (V) and provide as output a control signal (S$_c$) to the electrostatic transducer (Tx, Ty) comprising the electrostatic stiffness to be applied to the vibrating mass (8, 10) that minimises the noise value (V), preferably minimising the amplitude of the noise value (V), and
- a transmission module (28) is configured to transmit the control signal (S$_c$) to the angle sensor (2) so as to apply the electrostatic stiffness by the electrostatic transducer (Tx, Ty) in accordance with the control signal (S$_c$).

## FIG.1

## FIG.2

## FIG.3

## FIG.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2960625 A1

**Littérature non-brevet citée dans la description**

- **LI CHENG et al.** A Digital Calibration Technique of MEMS Gyroscope for Closed-Loop Mode-Matching Control. *Mircomachines*, 25 June 2019, vol. 10 (8)

- **CHINWUBA EZEKWE et al.** A Mode-MAtching Closed-Loop Vibratory Gyroscope Readout Interface With a 0.004/s/VHz Noise Floor Over a 50 Hz Band. *IEEE Journal of Solid-State Circuits*, 01 December 2019, vol. 43 (12)
- *IEEE Recommended Practice for Inertial Sensor Test Equipment, Instrumentation, Data Acquisition and Analysis*, 01 January 2005